(19) Europäisches Patentamt
European Patent Office
Office européen des brevets

(11) **EP 2 353 069 B1**

## (12) EUROPEAN PATENT SPECIFICATION

(45) Date of publication and mention
of the grant of the patent:
**03.07.2013 Bulletin 2013/27**

(51) Int Cl.:
**G06F 3/042** *(2006.01)*

(21) Application number: **09793088.7**

(22) Date of filing: **29.09.2009**

(86) International application number:
**PCT/US2009/058682**

(87) International publication number:
**WO 2010/039663 (08.04.2010 Gazette 2010/14)**

(54) **STEREO OPTICAL SENSORS FOR RESOLVING MULTI-TOUCH IN A TOUCH DETECTION SYSTEM**

STEREOOPTISCHE SENSOREN ZUR MULTITOUCH-AUFLÖSUNG IN EINEM BERÜHRUNGSERFASSUNGSSYSTEM

CAPTEURS OPTIQUES STÉRÉOS POUR RÉSOUDRE UN TOUCHER MULTIPLE DANS UN SYSTÈME DE DÉTECTION DE TOUCHER

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **02.10.2008 NZ 57168108**

(43) Date of publication of application:
**10.08.2011 Bulletin 2011/32**

(73) Proprietor: **Next Holdings Limited Ponsonby, Auckland 1011 (NZ)**

(72) Inventor: **NEWTON, John, David Te Atatu, Auckland 0610 (NZ)**

(74) Representative: **Feller, Frank Weickmann & Weickmann Postfach 860 820 81635 München (DE)**

(56) References cited:
**DE-A1-102007 021 537     US-A1- 2005 030 287 US-A1- 2006 232 830**

## Description

### PRIORITY CLAIM

This application claims priority to New Zealand Provisional Patent Application No. 571,681, filed on October 2, 2008 and entitled "STEREO CAMERA TOUCH SCREEN RESOLVING MULTITOUCH.".

### TECHNICAL FIELD

The present subject matter pertains to touch detection systems that allow a user to interact with one or more processing devices by touching on or near a surface.

### BACKGROUND

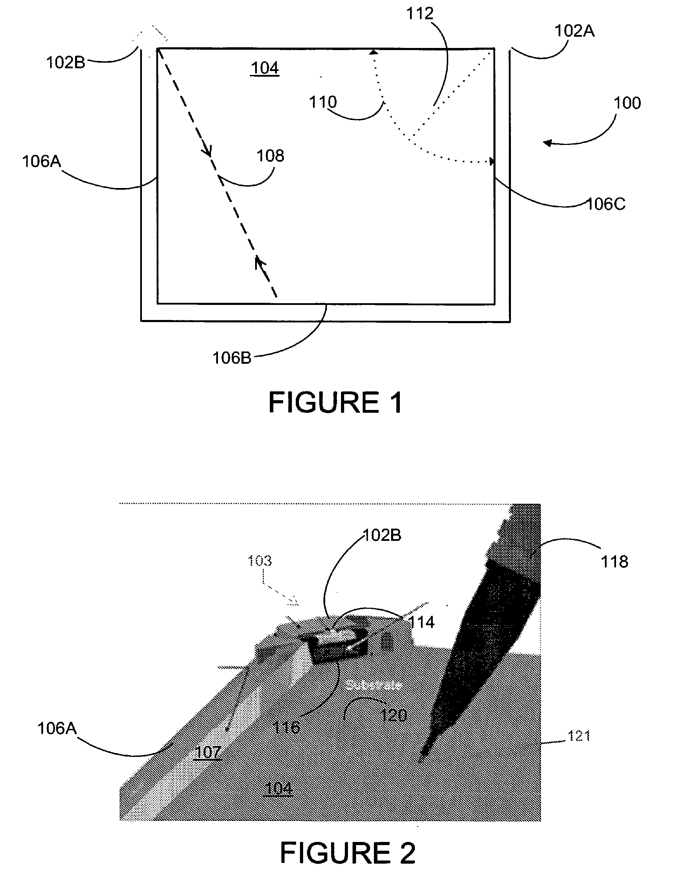

FIG. 1 illustrates an example of an optical touch detection system 100 that relies on detection of light traveling in optical paths that lie in one or more detection planes in an area 104 ("touch area" herein) on or above the touched surface. FIG. 2 features a perspective view of a portion of system 100. For example, touch detection systems based on optical sensor technology can use combinations of line scan sensors or area image sensors (also called area image cameras), digital signal processing, front or back illumination, and algorithms to determine a point or area of touch. In the example shown in FIGS. 1 and 2, two optical sensors 102A and 102B are positioned along one or more edges of the touch area 104, with their fields of view pointed towards a bezel 106 (segments of which are represented at 106A, 106B, and 106C). Optical sensors 102A, 102B, which may be line scan sensors or area image sensors, are oriented to track the movement of any object within the touch area 104 by detecting interruptions of light within their fields of view. The field of view 110 and optical center 112 of one optical sensor 102A is shown by way of example.

In some systems, an optical sensor 102A and 102B may be included within an optical assembly that also includes components for emitting light. For example, FIG. 2 shows an optical assembly 103 that includes an optical sensor 102B and one or more optical emitters 114. An optical emitter 114 may be an IR-LED or any other suitable light emitting device. Optical emitter(s) may be aligned with the optical center of the optical sensor 102B, or may be offset therefrom. In other systems, optical emitters 114 may be separate components (*i.e.,* not integrated within an optical assembly 103) that are mounted along one or more edges of touch area 104, so as to direct light across the touch area 104 and toward the optical sensors 102 in the absence of interruption by an object.

Some touch detection systems include reflective or retroreflective materials positioned around the touch area 104 (e.g., mounted to a bezel 106 or the like) for reflecting or guiding light from optical emitter(s) 114 toward the optical sensors 102. As is known in the art, retroreflective materials are designed to return light in substantially the same direction from which it originated. As shown by way of example in FIG. 2, retroreflective material 107 may be positioned along or mounted to certain segments of the bezel 106. Exemplary ray trace 108 in FIG. 1 indicates that light may thus be retroreflected from the bezel 106 back towards the optical sensor 102B (assuming that an optical emitter 114 is assembled with or positioned close to the optical sensor 102B). The returned light is received through a window 116 (which may be or include a lens) of optical sensor 102B, as shown in FIG. 2.

As shown in the perspective view of FIG. 2, if an object 118 (a stylus in this example) is interrupting light in the detection plane, the object will cast a shadow 120 on the bezel (bezel segment 106A in this example) which is registered as a decrease in retroreflected light. Shadow 121, which falls in the opposite direction of shadow 120, is only partially shown in FIG. 2. In this particular example, optical sensor 102A (not shown in FIG. 2) would register the location of shadow 120 to determine the direction of the shadow cast on bezel segment 106A, while optical sensor 102B would register shadow 121 that is cast on bezel segment 106C within its field of view. Those skilled in the art will appreciate that other shadows may occur on segments of the bezel 106 as well, depending on the geometry and type of the emitted light and ambient conditions.

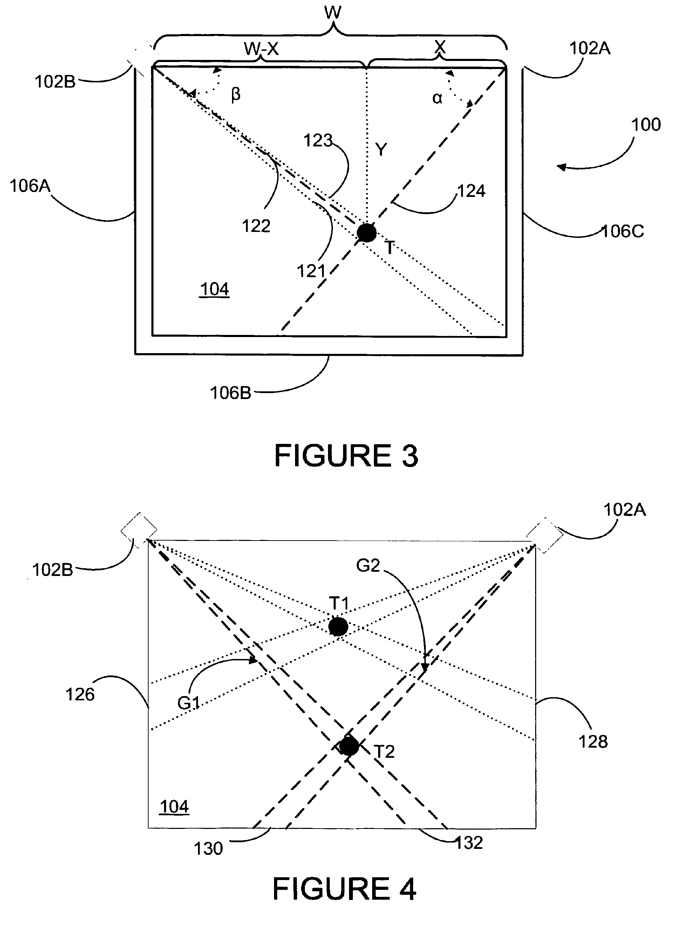

FIG. 3 illustrates the geometry involved in the location of a touch point T relative to touch area 104 of system 100. Based on the interruption in detected light, touch point T can be triangulated from the intersection of two lines 122 and 124. Lines 122 and 124 each correspond to a ray trace from the center of a shadow detected by the optical sensors 102A and 102B, respectively. The borders 121 and 123 of one shadow are illustrated with respect to light detected by optical sensor 102B. The distance W between optical sensors 102A and 102B is known, and angles $\alpha$ and $\beta$ can be determined from lines 122 and 124. Coordinates (X,Y) for touch point T can be determined by the expressions $\tan \alpha = Y/X$ and $\tan \beta = Y / (W-X)$.

As shown at FIG. 4, however, problems can arise if two points are simultaneously touched, with "simultaneously" referring to touches that happen within a given time interval during which interruptions in light are evaluated. In particular, FIG. 4 shows two touch points T1 and T2 and four resulting shadows 126, 128, 130, and 132 at the edges of touch area 104. Although the centerlines are not illustrated in this example, touch point T1 can be triangulated from respective centerlines of shadows 126 and 128 as detected via optical sensors 102A and 102B, respectively. (The centerlines can be determined by halving the distance between the respective edges of the shadows 126, 128.) Touch point T2 can be triangulated from centerlines of shadows 130 and 132 as detected via optical sensors 102A and 102B, respectively. Shadows 126 and 132 intersect at G1 and shadows 128 and 130 intersect at G2, and the intersections are detected as "ghost" points. To the triangulation software that may be used calculate touch point coordinates, the ghost points G1 and G2 and touch points T1 and T2 all appear as "potential points" that must be evaluated to determine which of them are the true touch points. Conventional optical touch detection systems having two optical sensors (and also most matrix based touch detection systems) have no way of resolving the true touch points from the ghost points.

Co-pending U.S. Patent Application Serial Nos. 12/494,217 (filed on May 1, 2009 and entitled "Systems and Methods for Resolving Multi-touch Scenarios Using Software Filters") and 12/368,372 (filed on February 10, 2009 and entitled "Systems and Methods for Resolving Multi-touch Scenarios for Optical Touchscreens"), which are both commonly assigned to the present applicant, both describe inventive optical touch detection systems and methods for distinguishing between ghost points and true touch points using only two optical sensors.

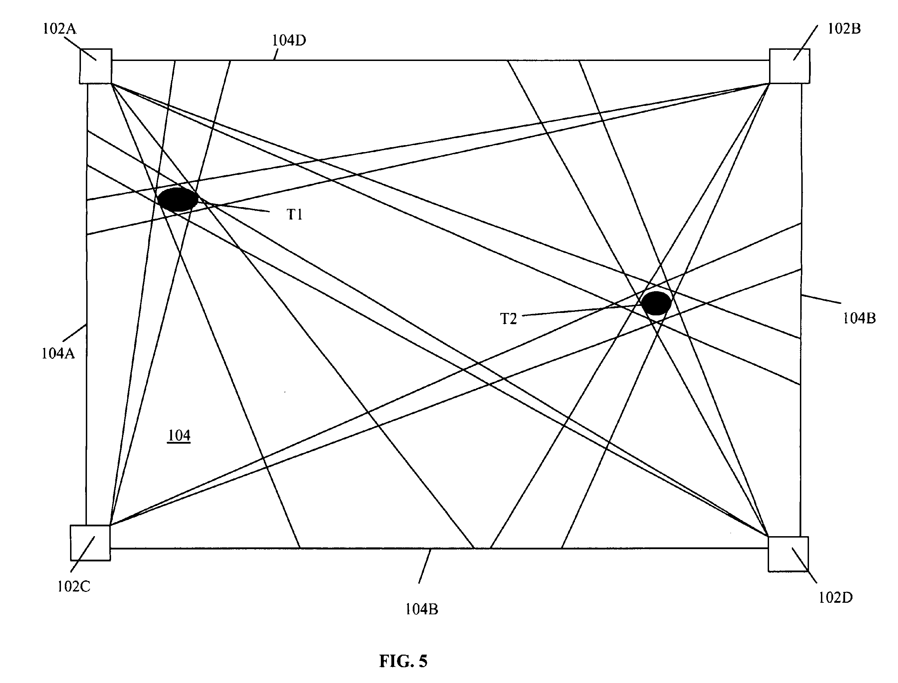

Another way to distinguish between ghost points and true touch points is by increase the number of observation axes, *i.e.*, by increasing the number of optical sensors 102 positioned along the touch area 104. In FIG. 5, for example, there are four optical sensors 102A-D; one positioned in each corner of the touch area 104. Although increasing the number of optical sensors 102 provides for improved triangulation accuracy, it also increases the number of potential points that must be evaluated to determine the true touch points (T1, T2). For example, as shown in FIG. 5 the two true touch points (T1, T2) and four optical sensors 102A-D produce a much greater number of shadow intersections (or ghost points) as compared to that in FIG. 4.

Additionally, increasing the number of true touch points further increases the number of ghost points (and thus potential points). For example, in FIG. 5 if a third touch point T3 (not shown) was introduced in touch area 104, then even more shadow intersections (or ghost points) would result. If there are "N" true touch points and "L" optical sensors, then the total number of potential points "PP" may be calculated with the equation:

$$PP = N^2 * \frac{L*(L-1)}{2}$$

In FIG.5 there are four optical sensors 102A-D (L = 4) and two touch points T1, T2 (N = 2) for a total of 24 potential points PP. Assuming four touch points (N = 4) in the system of FIG. 5, there would be 96 potential points PP, and assuming five touch points (N = 5) there would be 150 potential points PP.

A "potential point pair" is a pair of two potential points PP. If the respective potential points PP within a pair are close together, the more likely it is that the pair represents a true touch point. Thus, to find the N actual touch points in the system of FIG. 5, the analysis involves searching through all combinations of potential point pairs that are the least distance apart and selecting N true touch points from this set by binning and sorting by frequency. "Combinations" in this context means all of the possible arrangements of potential point pairs from the total number of potential points PP. The number of combinations may be derived from the following formula:

$$Combinations = \frac{PP!}{2!(PP-2)!}$$

Assuming four potential points PP, there are 6 combinations of potential point pairs that must be evaluated to determine distance. Assuming 96 potential points PP, there are 4,560 potential point pairs, and assuming 150 potential points PP there are 11,175 potential point pairs. As described above, once all potential point pairs are identified, it is necessary to compute the distance between each potential point PP within each pair and to compare the computed distances in order to determine which pairs represent the true touch points. This analysis is computationally intensive because is involves taking the square root of the x,y difference for each potential point pair. Thus, the analysis needed to ultimately determine the location of the true touch points dramatically increases in conventional touch detection systems as the number of optical sensors 102 increases. Yet another problem with a four optical sensor arrangement, such as that shown in FIG. 5, is that the two optical sensors 102C and 102D positioned along the bottom of the touch area 104 may be more exposed to dust, debris and bright ambient light.

US 2006/232830 A1 discloses a touch detection system according to the preamble part of claim 1, a method for resolving multitouch scenarios according to the preamble part of claim 14 and a computer-readable medium tangibly embodying program code operable for causing a processor to identify a true touch point from a plurality of potential points according to the preamble part of claim 18.

DE 10 2007 021 537 A1 discloses a touch detection system for resolving multitouch scenarios according to the preamble part of claim 19, comprising a touch area, first pair of optical sensors and a second pair of optical sensors, positioned along edges of the touch area, and a computer system interfaced with the sensors, wherein the touch detection system generates a plurality of images based on the sensor signals and determines relative positions of touch objects based on the plurality of images.

## SUMMARY

Objects and advantages of the present subject matter will be apparent to one of ordinary skill in the art upon careful review of the present disclosure and/or practice of one or more embodiments of the claimed subject matter.

In accordance with one or more aspects of the present subject matter, the total number of potential point pairs in a touch detection system may be reduced-thereby reducing the computational analysis needed to distinguish between ghost points and true touch points-by providing at least two pairs of optical sensors. Thus, one aspect of the present invention increases the total number of optical sensors but at the same time reduces the total number of potential point pairs that need to be evaluated to resolve multitouch scenarios.

Each pair of optical sensors may be comprised of two individual sensors that are separated from each other by a triangulation baseline. In one embodiment, a pair of optical sensors includes a first sensor positioned in a first corner of a touch area and a second sensor positioned in a second corner of the touch area. Thus, the triangulation baseline may comprise the distance between the first and second corners of the touch area. In other embodiments, however, the individual optical sensors within a pair are positioned anywhere along the edges of the touch area (in other words, not necessarily in the corners of the touch area) and thus the triangulation baseline is not limited to the distance between corners of the touch area. Additionally, the at least two pairs of optical sensors may be positioned in a variety of ways with respect to each other.

Each pair of optical sensors may be used to detect and calculate its own set of potential points. In other words, a first pair of optical sensors is used to identify a first set of potential points and a second pair of optical sensors is used to identify a second set of potential points. Potential point pairs are then determined by comparing the first and second sets of potential points, i.e., each potential point pair includes a potential point from the first set and a potential point from the second set. Each potential point pair is evaluated to determine the distance between its constituent potential points. The true touch points are identified by selecting the potential point pairs having the shortest distances between their constituent potential points.

## BRIEF DESCRIPTION OF THE DRAWINGS

A full and enabling disclosure including the best mode of practicing the appended claims and directed to one of ordinary skill in the art is set forth more particularly in the remainder of the specification. The specification makes reference to the following appended figures, in which use of like reference numerals is intended to illustrate like or analogous components.

FIG. 1 is a block diagram illustrating a first exemplary conventional optical touch detection system.

FIG. 2 is a perspective view of the system of FIG. 1.

FIG. 3 is a diagram illustrating the geometry involved in calculating touch points in a typical optical touch detection system.

FIG. 4 is a diagram illustrating the occurrence of "ghost points" when multiple simultaneous touches occur in an optical touch detection system.

FIG. 5 is a block diagram illustrating a second exemplary conventional optical touch detection system that includes four optical sensors.

FIG. 6A is a block diagram illustrating an exemplary touch detection system having two stereo pairs of optical sensors, in accordance with certain embodiments of the present invention.

FIG. 6B is an enlarged view of a portion of the touch area shown in FIG. 6A..

FIG. 7A is a block diagram illustrating an exemplary touch detection system having two stereo pairs of optical sensors, in accordance with certain alternative embodiments of the present invention.

FIG. 7B is a block diagram illustrating an exemplary touch detection system having two stereo pairs of optical sensors, in accordance with certain other alternative embodiments of the present invention.

FIG. 8 is a block diagram partially illustrating an exemplary touch detection system in which a pairs of optical sensors has a triangulation base line that is relatively short, in accordance with certain embodiments of the present invention.

FIG. 9 is a block diagram illustrating an exemplary touch detection system in which three optical sensors are used to form two stereo pairs of optical sensors, in accordance with certain embodiments of the present invention.

FIG. 10 is a block diagram of an optical assembly that includes two optical sensors, in accordance with certain embodiments of the present invention.

FIG. 11 is a flowchart illustrating an exemplary method for resolving multitouch scenarios using at least two pairs of optical sensors, in accordance with certain embodiments of the present invention.

FIG. 12 is a block diagram illustrating an exemplary touch detection system and showing an exemplary computing device forming a part thereof, in accordance with certain embodiments of the present invention.

## DETAILED DESCRIPTION OF THE DRAWINGS

Reference will now be made in detail to various and alternative exemplary embodiments and to the accompanying drawings. Each example is provided by way of explanation, and not as a limitation. It will be apparent to those skilled in the art that modifications and variations can be made without departing from the scope or spirit of the disclosure and claims. For instance, features illustrated or described as part of one embodiment may be used on another embodiment to yield still further embodiments. Thus, it is intended that the present disclosure includes any modifications and variations as come within the scope of the appended claims and their equivalents.

The present invention provides optical touch detection systems and methods for resolving multi-touch by using at least two stereo optical sensor pairs. The optical sensor pairs separately calculate range and triangulate touch positions. The term "optical sensor" is used broadly herein to refer to any type of sensor device that is capable of detecting the presence or absence of light, *i.e.,* the amount of photons within a given area, such as a pixel, and generating data signals representing that information. For example, an optical sensor may be a line scan sensor or area image sensor (also called an area image camera). Some optical sensors capture static optical data, while others may be used to capture dynamic (i.e., motion video) optical data. Some optical sensors detect only variations of light intensity (i.e., black/white optical data), while some detect colors.

In the embodiments described herein, optical sensors are used to detect shadows, i.e., interruptions of reflected light caused by touch points within the touch area. However, in other embodiments the data captured and output by certain types of optical sensors (e.g., area image sensors) may be used to generate images (i.e., optical duplicates) of the touch area, from which the edges and/or centerlines of the touch object(s) in the image may be used to calculate touch point coordinates in the same or a similar way that shadows are utilized. For example, the edges and/or centerline of the touch object in each image may be used to determine relative positions of touch objects, which may be triangulated to determine potential points, as will be described below with respect to shadows. Therefore, while the described embodiments refer to the detection and triangulation of shadow coordinates, it should be recognized that the principles of the invention also apply to the detection and triangulation of image coordinates. As used herein, the term "touch object" is intended to refer to any object used to effect a touch point, such as fingers, styluses or other pointers.

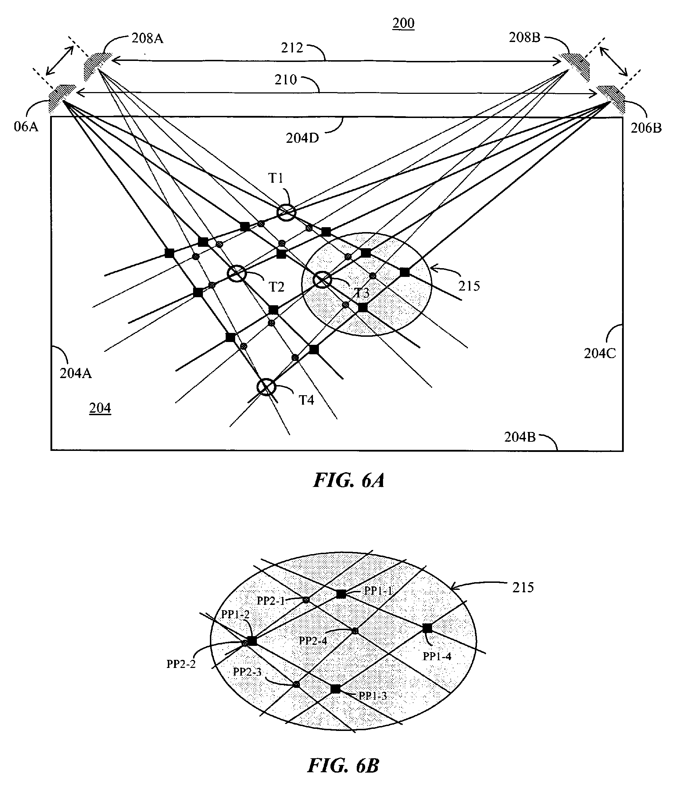

FIG. 6A illustrates an exemplary touch detection system 200 configured in accordance with one or more embodiments of the present invention. In this example, there is a touch area 204 having edges 204A, 204B, 204C, and 204D. As is known in the art, the touch area 204 may be bounded by a bezel or other type of frame. In certain embodiments, a retroreflective material is mounted or applied to the bezel and may comprise prismatic film, tape or paint. For example, the retroreflective material may be applied to at least three sides of the bezel adjacent to edges 204A, 204B and 204C of the touch area 204. In other embodiments, the retroreflective material may be substituted with other types of reflective or refractive materials, including mirrors, prisms and the like. Furthermore, the principles of the present invention will work in systems employing either forward-lighting or back-lighting illumination techniques.

In addition, FIG. 6 shows two pairs of optical sensors 206, 208 positioned along an edge 204D of the touch area 204. The first pair of optical sensors 206 may comprise a first optical sensor 206A and a second optical sensor 206B. Similarly, the second pair of optical sensors 208 may comprise a third optical sensor 208A and a fourth optical sensor 208B. The placement of the individual optical sensors within each pair relative to each other and the placement of the optical sensor pairs relative to each other, as described more fully below, may influence aspects of the present subject matter.

In some embodiments, each optical sensor 206A, 206B, 208A, and 208B may be a component of an optical assembly that also includes one or more optical emitter. For instance, light emitting diodes (LEDs) may be used to generate infrared (IR) radiation that is directed over one or more optical paths in the detection plane. Other portions of the EM spectrum or even other types of energy may be used as applicable with appropriate emitter and sensor devices. In other embodiments, the touch area 204 may be illuminated by one or more separate illumination sources.

As a general matter, each of the optical sensors 206A, 206B, 208A, 208B are positioned around the touch area 204 so that their fields of view are pointed toward the surrounding bezel. That is, the optical sensors 206A, 206B, 208A, 208B detect shadows cast on the bezel by touch objects (e.g., finger, stylus, pointer, etc.) that interrupt the light or other energy that illuminates the touch area 204. As discussed above, the positions of these shadows can be triangulated to calculate the locations of potential touch points. Such calculations can include algorithms to compensate for discrepancies (e.g., lens distortions, ambient conditions, damage to or impediments on the touch screen or other touched surface, etc.), as applicable. The pairing of optical sensors 206, 208 in accordance with the present invention significantly reduces the complexity of computations needed to ascertain which of the potential points are ghost points and which are true touch points.

The individual optical sensors within each pair of optical sensors 206, 208 are separated by a "triangulation base line." For example, optical sensors 206A and 206B are positioned in or near opposite corners of the touch area 204 and are separated by a first triangulation base line 210. Similarly, optical sensors 208A and 208B are also positioned in or near opposite corners of the touch area 204 and are separated by a second triangulation base line 212. Because the individual optical sensors within each pair of optical sensors 206, 208 are positioned in or near opposite corners of the touch area 204, both the first and second triangulation base lines 210, 212 are approximately equal to the width of the touch area 204. The precise length of each triangulation base line 210, 212 can, of course, be easily calculated, for example when the touch detection system 200 is constructed and/or calibrated.

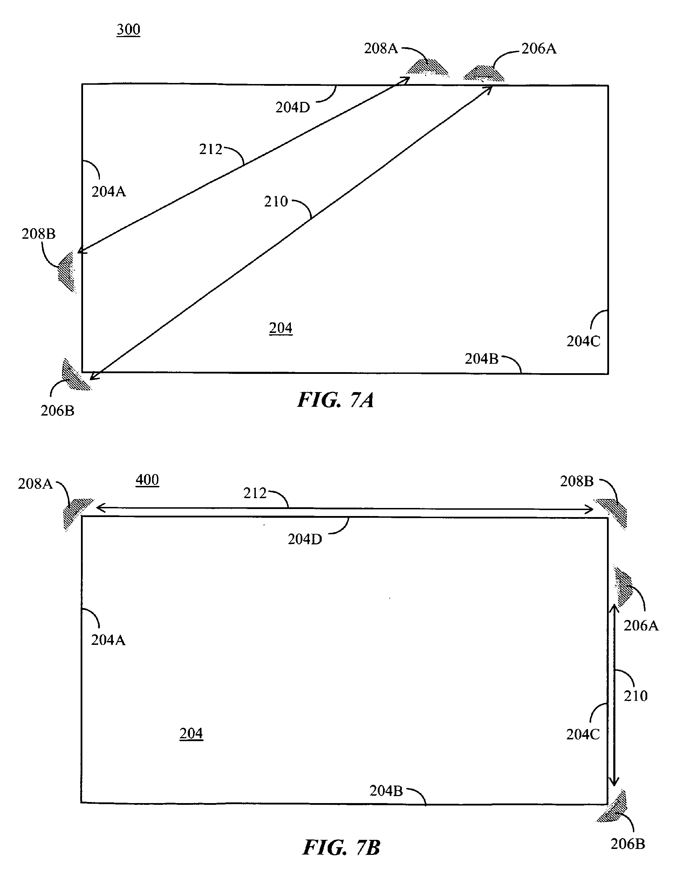

But the optical sensors 206, 208 do not need to be positioned in the corners of the touch area 204, and accordingly the triangulation base lines 210, 212 can have other dimensions in other embodiments. For example, FIG. 7A shows an embodiment in which optical sensor 206A is positioned along edge 204D of the touch area 204 and optical sensor 206B is positioned at the corner where edges 204A and 204B meet. FIG. 7A also shows optical sensor 208A positioned along edge 204D of the touch area 204 and optical sensor 208B positioned along edge 204A.

In FIGS. 6A and 7A the pairs of optical sensors 206, 208 are positioned relatively close to one another. For example, the two "A" optical sensors 206A, 208A are positioned adjacent to one another, and the two "B" optical sensors 206B, 208B are positioned adjacent to one another. But in other embodiments the pairs of optical sensors 206, 208 may not be positioned so closely or adjacent to one another. For example, in FIG. 7B the "A" optical sensors 206A and 208A are not adjacent to one another, and neither are the "B" optical sensors 206B, 208B. Thus, many positions of the pairs of optical sensors 206, 208 with respect to each other are possible.

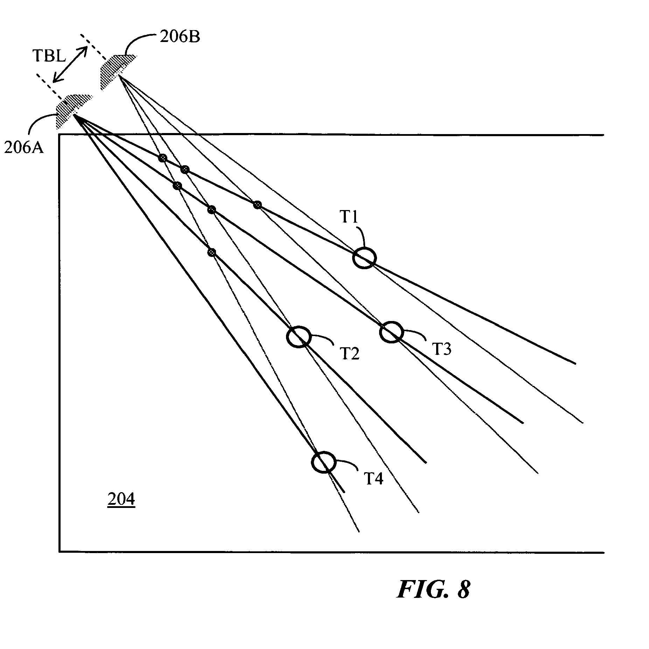

In general, embodiments in which the triangulation base lines 210, 212 are relatively longer tend to provide more accuracy than embodiments in which the triangulation base lines 210, 212 are relatively shorter. FIG. 8, for example, shows a pair of optical sensors 206A, 206B having a triangulation base line 210 that is relatively short. As shown, a short triangulation base line 210 causes the optical sensors 206A, 206B to have a very similar field of view, which compromises the system's triangulation accuracy. While the accuracy of optical sensor pairings having shorter triangulation base lines may be acceptable in some embodiments, the increased accuracy of optical sensor parings having longer triangulation base lines may be preferred in other embodiments.

In accordance with the present invention, the pairs of optical sensors 206, 208 operate independently of one another, so that each pair is used to calculate a separate set of potential points PP. That is, the first pair of optical sensors 206 is used to calculate a first set of potential points PP1, and the second pair of optical sensors 208 is used to calculate a second set of potential points PP2. The use of dual sets of potential points (PP1, PP2) effectively simulates two overlapped touch detection systems that operate independently of each other.

In the example illustrated in FIG. 6A, there are four simultaneous true touch points (T1-T4) represented by circles in touch area 204. Touch points may be considered "simultaneous" if they occur within a given time window during which the optical sensors 206, 208 detect the presence or absence of light. For example, the touch points may occur in the same sampling interval or over multiple sampling intervals considered together. The touch points may be caused by different touch objects (e.g., fingers, styluses, or a combination thereof, etc.) or different portions of the same touch object that intrude into the touch area 204 at different locations, for example.

Each touch point T1-T4 creates disturbances of light, which are detected by the optical sensors 206, 208 as shadows. In the case of four touch points T1-T4, each optical sensor 206A, 206B, 208A, 208B detects four shadows. For ease of reference, only representative centerlines of the respective shadows are shown in FIG. 6A. The calculation of such centerlines based on data generated by the optical sensors 206A, 206B, 208A, 208B is well known in the art. Accordingly, the shadows detected by the first pair of optical sensors 206 can be triangulated to determine coordinates for a first set of 16 potential points, which comprise the four true touch points represented by circles T1-T4 and the 12 ghost points represented by square dots in the figure. Similarly, the shadows detected by the second pair of optical sensors 208 can be triangulated to determine coordinates for a second set of 16 potential points, which comprise the four true touch points represented by circles T1-T4 and the 12 ghost points represented by round dots in the figure.

Once the coordinates of all potential points are determined, true touch points may be distinguished from ghost points by comparing the first set of potential points PP1 with the second set of potential points PP2. This is done by calculating the distance between each potential point of the first set of potential points PP1 and each potential point of the second set of potential points PP2. Thus, the potential point pairs to be evaluated are each made up of a potential point from the first set of potential points PP1 and a potential point from the second set of potential PP2. As previously described, the closer together the potential points in a potential point pair, the more likely that potential point pair corresponds to a true touch point.

Pairing optical sensors in accordance with the present invention is beneficial, therefore, because it is not necessary to compute and analyze all combinations of all potential point pairs. Instead, it is only necessary to compare the first set of potential points PP1 identified by one pair of optical sensors 206 with the second set of potential points PP2 identified by another pair of optical sensors 208. In addition, aspects of the current invention provide redundancy if one of the pairs of optical sensors 206, 208 should fail. Thus, if one pair fails then the other pair will still function, and will be able to collect its own set of potential points PP.

In the example of FIG. 6A, the four touch points result in only 16 potential points PP for each pair of optical sensors 206, 208, which translates to 256 potential point pairs ($N^4 = 4^4 = 256$). By contrast, four touch points in the conventional system of FIG. 5 results in 96 total potential points PP and 4,560 potential point pairs, all of which must be analyzed to distinguish between true touch points and ghost points in that system. Thus, the present invention, as embodied in the system shown in and described with reference to FIG. 6A, yields approximately 18 times fewer potential point pairs for analysis than the conventional system. This improvement leads to a reduction in the computational analysis needed to distinguish between ghost points and true touch points.

FIG. 6B is an enlarged view of a portion 215 of the touch area 204 shown in FIG. 6A. In this illustration, four of the potential points from the first set of potential points PP1 are designated as PP1-1, PP1-2, PP1-3, PP1-4 and four of the potential points from the second set of potential points PP2 are designated as PP2-1, PP2-2, PP2-3, PP2-4. Given this subset of potential points from the two sets of potential points PP1, PP2, there are 16 potential point pairs to evaluate: (1) PP1-1 & PP2-1; (2) PP1-1 & PP2-2; (3) PP1-1 & PP2-3; (4) PP1-1 & PP2-4; (5) PP1-2 & PP2-1; (6) PP1-2 & PP2-2; (7) PP1-2 & PP2-3; (8) PP1-2 & PP2-4; (9) PP1-3 & PP2-1; (10) PP1-3 & PP2-2; (11) PP1-3 & PP2-3; (12) PP1-3 & PP2-4; (13) PP1-4 & PP2-1; (14) PP1-4 & PP2-2; (15) PP1-4 & PP2-3; (16) PP1-4 & PP2-4. As shown, the distance between the potential points PP1-2 & PP2-2 is much smaller that the distances between the other potential point pairs. Applying this same methodology to the example of FIG. 6A, the 256 potential point pairs will be evaluated to identify the four potential point pairs having the shortest distances between their constituent potential points and those four potential point pairs will be determined to correspond to the four true touch points.

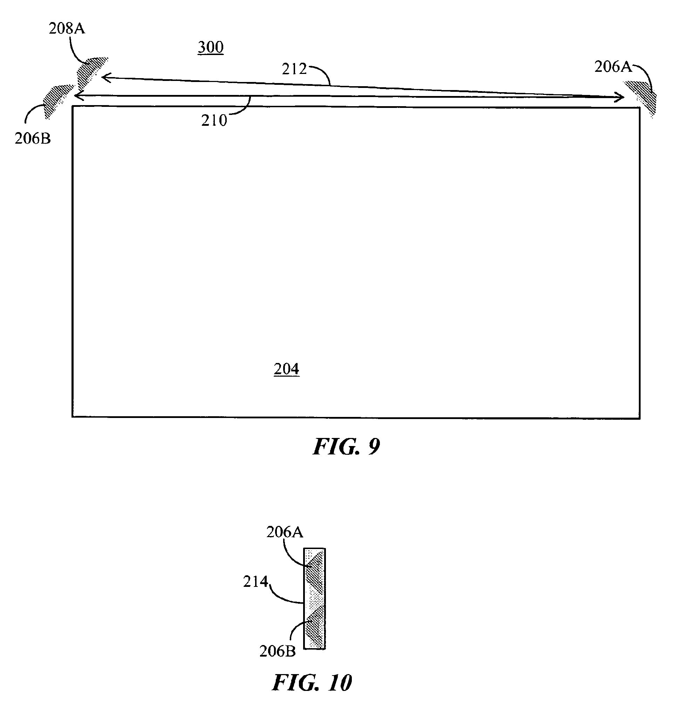

In other embodiments of the present invention, the desired stereo pairing of optical sensors may be achieved with as few as three optical sensors. For example, as shown in FIG. 9, a first optical sensor 206A may be paired with a second optical sensor 206B to form a first optical sensor pairing. Additionally, optical sensor 206A may be separately paired with a third optical sensor 208A to form a second optical sensor pairing. In such an arrangement, the first optical sensor pairing (206A, 206B) has a different effective field of view than the second optical sensor pairing (206A, 208A) and, therefore, the triangulation methodology described above can be used to distinguish between true touch points and ghost points. Furthermore, the calculation of potential point coordinates can be simplified in such an arrangement because the same shadows detected by the first optical sensor 206A can be used for the first set of potential points PP1 and the second set of potential points PP2. In still other embodiments, the at least two stereo pairs of optical sensors may comprise various pairings of more than four optical sensors. Accordingly, any arrangement and placement of individual optical sensors into at least two pairings is possible and the present invention is by no means limited to the particular arrangement or positions as shown in the figures.

Although each optical sensors 206A, 206B, 208A, and 208B has been described herein as a separate element, in certain embodiments at least two optical sensors may be housed in a single optical assembly (which may also include one or more optical emitters). For example, FIG. 10 shows one optical assembly 214 that includes two optical sensors 206A, 206B. Both optical sensors 206A, 206B may be mounted on a single circuit board and/or may be constructed from shared components, such as lenses wiring, housing elements, etc. As described above, each of the optical sensors 206A, 206B may be paired with another optical sensors to achieve a desired triangulation base line. In some embodiments, optical assembly 214 additionally includes optical emitters (not shown) or other components.

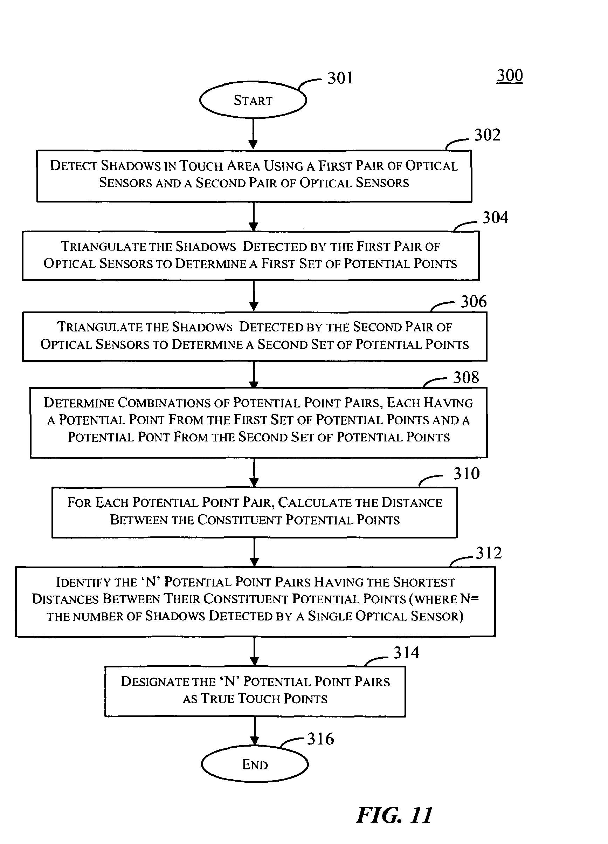

FIG. 11 is a flowchart showing an exemplary method 300 for resolving a multitouch scenario using at least two stereo pairs of optical sensors. The method 300 begins at start step 301, where it is assumed that a touch detection system in accordance with the present invention is subjected to multiple simultaneous touches within its touch area. It is also assumed that the number of simultaneous touches will be the same as the number of shadows (i.e., interruptions of energy emitted across a touch area 204) detected by a single optical sensor. In other words, if a single sensor 206A detects four shadows, the system will determine that four simultaneous touches have occurred and that it must calculate the positions of four true touch points.

From step 301, the exemplary method proceeds to step 302, where a plurality of shadows cast by simultaneous touches (e.g., touch points T1-T4) within the touch area 204 are detected by a first pair of optical sensors 206 and a second pair of optical sensors 208. Next at step 304, the coordinates of the shadows detected by the first pair of optical sensors 206 are triangulated to determine a first set of potential points PP1. Similarly, at step 306 the coordinates of the shadows detected by the second pair of optical sensors are triangulated to determine a second set of potential points PP2. Those skilled in the art will appreciate that step 304 and step 306 may occur in parallel or in reverse order in some embodiments.

Next at step 308, combinations of potential point pairs are determined, each pair including a potential point from the first set of potential points (PP1) and a potential point from the second set of potential points (PP2). As described above, for 'N' touch points, the number of potential points in each set of potential points will be $N^2$. Thus, the number of potential point pair combinations will be $N^4$. In some embodiments, all such potential point pair combinations may be determined. In other embodiments, however, further logic may be used to eliminate potential point pairs that are unlikely to represent true touch points, thus reducing the number of potential point pairs that need to be evaluated. For example, in the case where the stereo pairs of optical sensors 206, 208 have a similar field of view, the potential points in each set may be paired according to order, with all other possible combinations being ignored. In other words, the first potential point in PP1 can be paired with the first potential point in PP2 (assuming that each set PP1 and PP2 is ordered the same relative to the touch area).

At step 310, each potential point pair is evaluated to determine the distance between its constituent potential points. Then potential point pairs are compared to each other at step 312 to identify the 'N' number of potential point pairs having the shortest distances between their constituent potential points, where 'N' is equal to the number of shadows detected by any one optical sensor (e.g., 206A). The 'N' potential point pairs are designated as true touch points at step 314 and then the exemplary method ends at step 316.

Once the "actual" points have been identified, the coordinates as determined from triangulation can be used in any suitable manner. For example, user interface or other systems components that handle input provided via a touch screen can be configured to support multi-touch gestures specified by reference to the simultaneous touch points. Although the examples herein referred to "touch" points, those skilled in the art will appreciate that the described shadows may result from a "hover" action or other gesture in which no actual contact occurs with a touch surface.

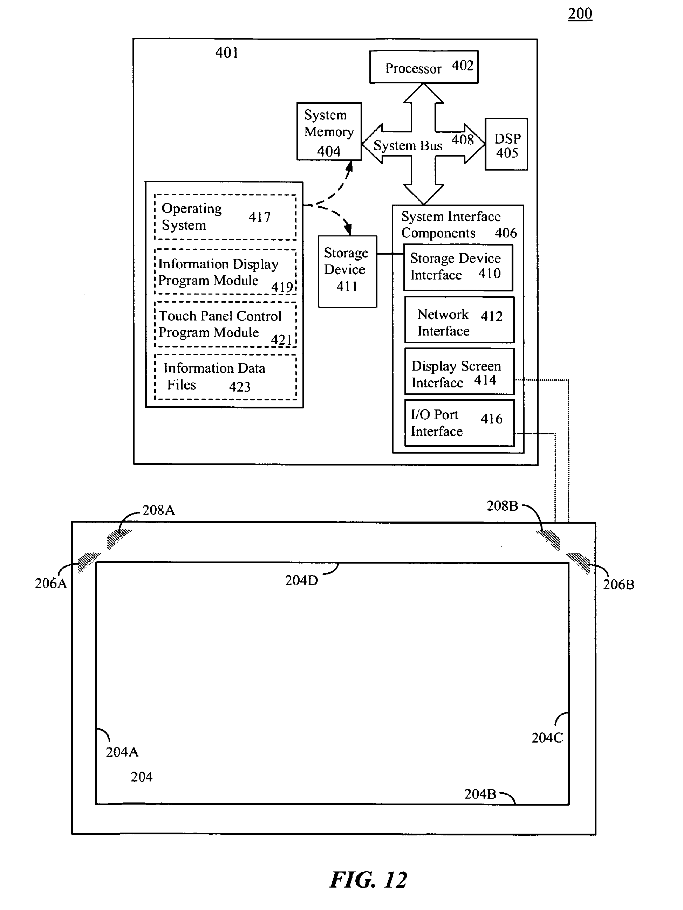

FIG. 12 is a block diagram illustrating an exemplary touch detection system 200, and showing an exemplary computing device 401 forming a part thereof. Computing device 401 may be functionally coupled to other elements of the touch screen system 200 by hardwire and/or wireless connections. Computing device 401 may be any suitable computing device, including, but not limited to a processor-driven device such as a personal computer, a laptop computer, a handheld computer, a personal digital assistant (PDA), a digital and/or cellular telephone, a pager, a video game device, etc. These and other types of processor-driven devices will be apparent to those of skill in the art. As used in this discussion, the term "processor" can refer to any type of programmable logic device, including a microprocessor or any other type of similar device.

Computing device 401 may include, for example, a processor 402, a system memory 404, and various system interface components 406. The processor 402, system memory 404, a digital signal processing (DSP) unit 405 and system interface components 406 may be functionally connected via a system bus 408. The system interface components 406 may enable the processor 402 to communicate with peripheral devices. For example, a storage device interface 410 can provide an interface between the processor 402 and a storage device 41 (removable and/or non-removable), such as a disk drive. A network interface 412 may also be provided as an interface between the processor 402 and a network communications device (not shown), so that the computing device 401 can be connected to a network.

A display screen interface 414 can provide an interface between the processor 402 and a display device of the touch detection system 200. For instance, interface 414 may provide data in a suitable format for rendering by the display device over a DVI, VGA, or other suitable connection. The display device may comprise a CRT, LCD, LED, or other suitable computer display, or may comprise a television, for example.

One or more input/output ("I/O") port interfaces 416 may be provided as an interface between the processor 402 and various input and/or output devices. For example, the optical sensors 206, 208 may be connected to the computing device 401 and may provide input signals representing detected patterns of light to the processor 402 via an input port interface 416. Similarly, the optical emitters and other components may be connected to the computing device 401 and may receive output signals from the processor 402 via an output port interface 416.

A number of program modules may be stored in the system memory 404, any other computer-readable media associated with the storage device 411 (e.g., a hard disk drive), and/or any other data source accessible by computing device 401. The program modules may include an operating system 417. The program modules may also include an information display program module 419 comprising computer-executable instructions for displaying images or other information on a display screen. In addition, aspects of the exemplary embodiments of the invention may be embodied in a touch panel control program module 421 for controlling optical assemblies, and/or for calculating touch locations (e.g., by implementing exemplary method 300 or a variation thereof), and discerning interaction states relative to the touch area based on signals received from the optical sensors.

In some embodiments, a DSP unit 405 is included for performing some or all of the functionality ascribed to the touch panel control program module 421. As is known in the art, a DSP unit 405 may be configured to perform many types of calculations including filtering, data sampling, and triangulation and other calculations and to control the modulation and/or other characteristics of the illumination systems. The DSP unit 405 may include a series of scanning imagers, digital filters, and comparators implemented in software. The DSP unit 405 may therefore be programmed for calculating touch locations and discerning other interaction characteristics as known in the art.

The processor 402, which may be controlled by the operating system 417, can be configured to execute the computer-executable instructions of the various program modules. Methods in accordance with one or more aspects of the present subject matter may be carried out due to execution of such instructions. Furthermore, the images or other information displayed by the information display program module 419, as well as other data used in accordance with aspects of the present invention, may be stored in one or more information data files 423, which may be stored on any computer readable medium associated with or accessible by the computing device 401.

When a user touches on or near the touch area 204, a variation will occur in the intensity of the energy beams that are directed across the touch area 204 in one or more detection planes. The optical sensors 206, 208 are configured to detect the intensity of the energy beams reflected or otherwise scattered across the touch area 204 and should be sensitive enough to detect variations in such intensity. Data signals produced by the optical sensors 206, 208 may be used by the computing device 401 to determine the location of the touch points relative to the touch area 204. Computing device 401 may also determine the appropriate response to a touch.

In accordance with some implementations, data from the optical sensors 206, 208 may be periodically processed by the computing device 401 to monitor the typical intensity level of the energy beams directed along the detection plane(s) when no touch is present. This allows the system to account for, and thereby reduce the effects of, changes in ambient light levels and other ambient conditions. The computing device 401 may optionally increase or decrease the intensity of the energy beams emitted by the optical emitters as needed. Subsequently, if a variation in the intensity of the energy beams is detected by the optical sensors 206, 208, computing device 401 can process this information to determine that one or more touch has occurred within the touch area.

Several of the above examples were presented in the context of a touch detection system that includes or is overlaid onto a display screen. However, it will be understood that the principles disclosed herein could be applied even in the absence of a display screen. For example, the touch area may encompass or overlay a static image or no image at all.

The various systems discussed herein are not limited to any particular hardware architecture or configuration. As was noted above, a computing device can include any suitable arrangement of components that provide a result conditioned on one or more inputs. Suitable computing devices include multipurpose microprocessor-based computer systems accessing stored software, but also application-specific integrated circuits and other programmable logic, and combinations thereof. Any suitable programming, scripting, or other type of language or combinations of languages may be used to implement the teachings contained herein in software.

Embodiments of the methods disclosed herein may be executed by one or more suitable computing devices. Such system(s) may comprise one or more computing devices adapted to perform one or more embodiments of the methods disclosed herein. As noted above, such devices may access one or more computer-readable media that embody computer-readable instructions which, when executed by at least one computer, cause the at least one computer to implement one or more embodiments of the methods of the present subject matter. When software is utilized, the software may comprise one or more components, processes, and/or applications. Additionally or alternatively to software, the computing device(s) may comprise circuitry that renders the device(s) operative to implement one or more of the methods of the present subject matter.

Any suitable computer-readable medium or media may be used to implement or practice the presently-disclosed subject matter, including, but not limited to, diskettes, drives, magnetic-based storage media, optical storage media, including disks (including CD-ROMS, DVD-ROMS, and variants thereof), flash, RAM, ROM, and other memory devices, and the like.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

**Claims**

1.  A touch detection system (200) for resolving multitouch scenarios, the system comprising:

    a touch area (204);
    one or more optical emitters (214) for emitting energy across the touch area;
    a first pair of optical sensors (206) positioned along at least one edge of the touch area;
    a second pair of optical sensors (208) positioned along at least one edge of the touch area; and
    a computing system (401) interfaced with the first and second pairs of optical sensors, the computer system configured to:

        receive data signals indicating a first plurality of shadows detected by the first pair of optical sensors (206) and a second plurality of shadows detected by the second pair of optical sensors (208) the first and second plurality of shadows caused by multiple true touch points,
        **characterized in that** the computer system is configured to:
        triangulating the first plurality of shadows to determine a first set of potential points and triangulating the second plurality of shadows to determine a second set of potential points,
        determining potential point pairs comprising combinations of the first set of potential points and the second set of potential points,
        for each potential point pair, calculating the distance between its constituent potential points, and
        determining that a plurality of the potential point pairs having the shortest distances between their constituent potential points are the true touch points.

2. The touch detection system (200) as in claim 1, wherein the touch area (204) is bounded on three sides by a bezel; and
wherein the first and second pair of optical sensors (206, 208) are each positioned to image the bezel.

3. The touch detection system (200) as in claim 2, wherein at least one of the optical emitters (214) is positioned in close proximity to each optical sensor of the first and second pair of optical sensor (206, 208); and
wherein the bezel has a retroreflective surface for retroreflecting energy emitted by each optical emitter in the direction of the corresponding optical sensor.

4. The touch detection system (200) as in claim 1, wherein each optical sensor of the first and second pair of optical sensors (206, 208) is housed in an assembly comprising at least one of the optical emitters.

5. The touch detection system (200) as in claim 1, wherein the first pair of optical sensors (206) comprises a first optical sensor (206A) and a second optical sensor (206B);
wherein the second pair of optical sensors (208) comprises a third optical sensor (208A) and a fourth optical sensor (208B); and
wherein the first optical sensor and the third optical sensor are positioned adjacent to one another and the second optical sensor and the fourth optical sensor are positioned adjacent to one another.

6. The touch detection system (200) as in claim 5, wherein the first optical sensor and the third optical sensor are housed in a single assembly.

7. The touch detection system (200) as in claim 5, wherein the second optical sensor and the fourth optical sensor are housed in a single assembly.

8. The touch detection system (200) as in claim 5, wherein the first optical sensor and the third optical sensor are positioned in a first corner of the touch area; and
wherein the second optical sensor and the fourth optical sensor are positioned in a second corner of the touch area.

9. The touch detection system (200) as in claim 1, wherein the first pair of optical sensors (206) is separated by a first triangulation base line, and the second pair of optical sensors (208) is separated by a second triangulation base line; and
wherein each of the first triangulation base line and the second triangulation base line is relatively long.

10. The touch detection system (200) as in claim 1, further comprising at least a third pair of optical sensors positioned along at least one edge of the touch area and interfaced with the computing device.

11. The touch detection system (200) as in claim 1, wherein at least one optical sensor of the first pair of optical sensors and the second pair of optical sensors is a line scan sensor and , an area image sensor, and a video camera.

12. The touch detection system (200) as in claim 1, wherein at least one optical sensor of the first pair of optical sensors and the second pair of optical sensors is an area image sensor.

13. The touch detection system (200) as in claim 12, wherein the area image sensor captures video data.

14. A method for resolving multitouch scenarios, the method comprising:

    emitting energy across a touch area (204);
    detecting a first plurality of shadows with a first pair of optical sensors (206) that are positioned along at least one edge of the touch area; and
    detecting a second plurality of shadows with a second pair of optical sensors (208) that are positioned along at least one edge of the touch area, wherein the first and second plurality of shadows are caused by multiple true touch points;
    **characterized by**:

    triangulating the first plurality of shadows to determine a first set of potential points and triangulating the second plurality of shadows to determine a second set of potential points;
    determining potential point pairs comprising combinations of the first set of potential points and the second set of potential points;
    calculating the distance between the constituent potential points for each potential point pair; and
    determining that a plurality of the potential point pairs having the shortest distances between their constituent potential points are the true touch points.

15. The method as in claim 14, wherein triangulating the first plurality of shadows occurs simultaneously with triangulating the second plurality of shadows.

16. The method as in claim 14, wherein a potential point pair comprises one potential point from the first set of potential points and one potential point from the second set of potential points.

**17.** The method as in claim 14, further comprising adjusting the level of energy that is emitted across the touch area to thereby reduce the effect of a change in ambient light.

**18.** A computer-readable medium tangibly embodying program code operable for causing a processor to identify a true touch point from a plurality of potential points, the computer-readable medium comprising:

program code for receiving data signals indicating a first plurality of shadows detected by a first pair of optical sensors (206), wherein the first pair of optical sensors are positioned along at least one edge of a touch area (204), and program code for receiving data signals indicating a second plurality of shadows detected by a second pair of optical sensors (208), wherein the second pair of optical sensors are positioned along at least one edge of the touch area and the first and second plurality of shadows are caused by multiple true touch points; **characterized by**
program code for triangulating the first plurality of shadows to determine a first set of potential points and triangulating the second plurality of shadows to determine a second set of potential points;
program code for determining potential point pairs comprising combinations of the first set of potential points and the second set of potential points;
program code for calculating the distance between constituent potential points for each potential point pair; and
program code for determining that a plurality of the potential point pairs having the shortest distances between their constituent potential points are the true touch points.

**19.** A touch detection system (200) for resolving multitouch scenarios, the system comprising:

a touch area (204);
a first pair of optical sensors (206) positioned along at least one edge of the touch area;
a second pair of optical sensors (208) positioned along at least one edge of the touch area; and
a computing system (401) interfaced with the first and second pairs of optical sensors, the computer system configured to:

generating a first plurality of images of the touch area based on data signals received from the first pair of area optical sensors (206) and generating a second plurality of images of the touch area based on data signals received from the second pair of optical sensors (208), and
for each of the first plurality of images and the second plurality of images, determining relative positions of touch objects used to effect multiple true touch points, **characterized by**
triangulating the relative positions of the touch objects of the first plurality of images to determine a first set of potential points and triangulating the relative positions of the touch objects of the second plurality of images to determine a second set of potential points,
determining potential point pairs comprising combinations of the first set of potential points and the second set of potential points,
for each potential point pair, calculating the distance between its constituent potential points, and
determining that a plurality of the potential point pairs having the shortest distances between their constituent potential points are the true touch points.

**20.** The touch detection system (200) as in claim 19, wherein each optical sensor of the first and second pair of optical sensors (206,208) is housed m an assembly comprising at least one of the area image cameras.

**21.** The touch detection system (200) as in claim 19, wherein the first pair of optical sensors (206) is separated by a first triangulation base line, and the second pair of optical sensors (208) is separated by a second triangulation base line; and
wherein each of the first triangulation base line and the second triangulation base line is relatively long.

**22.** The touch detection system (200) as in claim 19, wherein the first pair of optical sensors comprises a first area image camera and a second area image camera;
wherein the second pair of area image cameras comprises a third area image camera and a fourth area image camera; and
wherein the first area image camera and the third area image camera are positioned adjacent to one another and the second area image camera and the fourth area image camera are positioned adjacent to one another.

**23.** The touch detection system (200) as in claim 22, wherein the first area image camera and the third area image camera are positioned in a first corner of the touch area; and
wherein the second area image camera and the fourth area image camera are positioned in a second corner of the touch area.

24. The touch detection system (200) as in claim 19, wherein the first plurality of images and the second plurality of images comprise video images of the touch area.

**Patentansprüche**

1. Berührungs-Erkennungssystem (200) zur Verarbeitung von Mehrfachberührungs-Geschehen, wobei das System umfasst:

   einen Berührungs-Bereich (204);
   einen oder mehrere optische Emitter (214) für die Ausgabe von Energie im Berührungs-Bereich;
   ein erstes Paar optischer Sensoren (206), die entlang wenigstens eines Rands des Berührungs-Bereichs angeordnet sind;
   ein zweites Paar optischer Sensoren (208), die entlang wenigstens eines Rands des Berührungs-Bereichs angeordnet sind; und
   ein Computersystem (401), das mit dem ersten und dem zweiten Paar optischer Sensoren über eine Schnittstelle verbunden ist, wobei das Computersystem dazu ausgebildet ist:

   Datensignale zu empfangen, die eine erste Mehrzahl von durch das erste Paar optischer Sensoren (206) erfassten Schatten anzeigen, und eine zweite Mehrzahl von durch das zweite Paar optischer Sensoren (208) erfassten Schatten anzeigen, wobei die erste und die zweite Mehrzahl von Schatten durch mehrere tatsächliche Berührungspunkte verursacht werden, **dadurch gekennzeichnet, dass** das Computersystem dazu ausgebildet ist:
   die erste Mehrzahl von Schatten zum Bestimmen einer ersten Gruppe möglicher Punkte zu triangulieren und die zweite Mehrzahl von Schatten zum Bestimmen einer zweiten Gruppe möglicher Punkte zu triangulieren, Paare möglicher Punkte zu bestimmen, die Kombinationen aus der ersten Gruppe möglicher Punkte und der zweiten Gruppe möglicher Punkte umfassen,
   für jedes Paar möglicher Punkte die Entfernung zwischen seinen konstituierenden möglichen Punkten zu berechnen, und
   zu bestimmen, dass eine Mehrzahl der Paare möglicher Punkte mit den kürzesten Entfernungen zwischen ihren konstituierenden möglichen Punkten die tatsächlichen Berührungspunkte sind.

2. Berührungs-Erkennungssystem (200) nach Anspruch 1, wobei der Berührungs-Bereich (204) auf drei Seiten durch eine Einfassung begrenzt ist; und
   wobei das erste und das zweite Paar optischer Sensoren (206, 208) jeweils zur Abbildung der Einfassung angeordnet sind.

3. Berührungs-Erkennungssystem (200) nach Anspruch 2, wobei wenigstens einer der optischen Emitter (214) in unmittelbarer Nähe zu jedem optischen Sensor des ersten und zweiten Paars optischer Sensoren (206, 208) angeordnet ist; und
   wobei die Einfassung eine retroreflektierende Fläche zum Retroreflektieren von durch jeden optischen Emitter in der Richtung des zugehörigen optischen Sensors ausgegebener Energie umfasst.

4. Berührungs-Erkennungssystem (200) nach Anspruch 1, wobei jeder optische Sensor des ersten und zweiten Paars optischer Sensoren (206, 208) in einer Baugruppe aufgenommen ist, die wenigstens einen der optischen Emitter umfasst.

5. Berührungs-Erkennungssystem (200) nach Anspruch 1, wobei das erste Paar optischer Sensoren (206) einen ersten optischen Sensor (206A) und einen zweiten optischen Sensor (206B) umfasst;
   wobei das zweite Paar optischer Sensoren (208) einen dritten optischen Sensor (208A) und einen vierten optischen Sensor (208B) umfasst; und wobei der erste optische Sensor und der dritte optische Sensor nebeneinander angeordnet sind und der zweite optische Sensor und der vierte optische Sensor nebeneinander angeordnet sind.

6. Berührungs-Erkennungssystem (200) nach Anspruch 5, wobei der erste optische Sensor und der dritte optische Sensor in einer einzigen Baugruppe aufgenommen sind.

7. Berührungs-Erkennungssystem (200) nach Anspruch 5, wobei der zweite optische Sensor und der vierte optische Sensor in einer einzigen Baugruppe aufgenommen sind.

8. Berührungs-Erkennungssystem (200) nach Anspruch 5, wobei der erste optische Sensor und der dritte optische Sensor in einer ersten Ecke des Berührungs-Bereichs angeordnet sind; und
   wobei der zweite optische Sensor und der vierte optische Sensor in einer zweiten Ecke des Berührungs-Bereichs angeordnet sind.

9. Berührungs-Erkennungssystem (200) nach Anspruch 1, wobei das erste Paar optischer Sensoren (206) durch eine erste Triangulations-Grundlinie getrennt ist und das zweite Paar optischer Sensoren (208) durch eine zweite Triangulations-Grundlinie getrennt ist; und

wobei jede von erster Triangulations-Grundlinie und zweiter Triangulations-Grundlinie relativ lang ist.

10. Berührungs-Erkennungssystem (200) nach Anspruch 1, welches ferner wenigstens ein drittes Paar optischer Sensoren umfasst, die entlang wenigstens eines Rands des Berührungs-Bereichs angeordnet sind und eine Schnittstelle zur Computervorrichtung umfassen.

11. Berührungs-Erkennungssystem (200) nach Anspruch 1, wobei wenigstens ein optischer Sensor des ersten Paars optischer Sensoren und des zweiten Paars optischer Sensoren ein Zeilensensor und ein Flächenbildsensor und eine Videokamera ist.

12. Berührungs-Erkennungssystem (200) nach Anspruch 1, wobei wenigstens ein optischer Sensor des ersten Paars optischer Sensoren und des zweiten Paars optischer Sensoren ein Flächenbildsensor ist.

13. Berührungs-Erkennungssystem (200) nach Anspruch 1, wobei der Flächenbildsensor Videodaten erfasst.

14. Verfahren zur Verarbeitung von Mehrfachberührungs-Geschehen, wobei das Verfahren umfasst:

das Ausgeben von Energie in einem Berührungs-Bereich (204);
Erkennen einer Mehrzahl von Schatten mit einem ersten Paar optischer Sensoren (206), die entlang wenigstens eines Rands des Berührungs-Bereichs angeordnet sind; und
Erkennen einer zweiten Mehrzahl von Schatten mit einem zweiten Paar optischer Sensoren (208), die entlang wenigstens eines Rands des Berührungs-Bereichs angeordnet sind, wobei die erste und die zweite Mehrzahl von Schatten durch mehrere tatsächliche Berührungspunkte verursacht werden; **gekennzeichnet durch**:

Triangulieren der ersten Mehrzahl von Schatten zum Bestimmen einer ersten Gruppe möglicher Punkte und Triangulieren der zweiten Mehrzahl von Schatten zum Bestimmen einer zweiten Gruppe möglicher Punkte;
Bestimmen der Paare möglicher Punkte, die Kombinationen aus der ersten Gruppe möglicher Punkte und der zweiten Gruppe möglicher Punkte umfassen;
Berechnen der Entfernung zwischen den konstituierenden möglichen Punkten für jedes Paar möglicher Punkte; und

Bestimmen, dass eine Mehrzahl der Paare möglicher Punkte mit den kürzesten Entfernungen zwischen ihren konstituierenden möglichen Punkten die tatsächlichen Berührungspunkte sind.

15. Verfahren nach Anspruch 14, wobei das Triangulieren der ersten Mehrzahl von Schatten gleichzeitig mit dem Triangulieren der zweiten Mehrzahl von Schatten erfolgt.

16. Verfahren nach Anspruch 14, wobei ein Paar möglicher Punkte einen möglichen Punkt aus der ersten Gruppe möglicher Punkte und einen möglichen Punkt aus der zweiten Gruppe möglicher Punkte umfasst.

17. Verfahren nach Anspruch 14, welches ferner das Anpassen der Höhe der Energie umfasst, die im Berührungs-Bereich ausgegeben wird, um damit die Auswirkung einer Veränderung des Umgebungslichts zu verringern.

18. Computerlesbares Medium, das offensichtlich einen Programmcode beinhaltet, der bewirkt, dass ein Prozessor einen tatsächlichen Berührungspunkt innerhalb einer Mehrzahl von möglichen Punkten identifiziert, wobei das computerlesbare Medium umfasst:

einen Programmcode zum Empfangen von Datensignalen, die eine erste Mehrzahl von durch ein erstes Paar optischer Sensoren (206) erfassten Schatten anzeigen, wobei das erste Paar optischer Sensoren entlang wenigstens eines Rands eines Berührungs-Bereichs (204) angeordnet ist, und
einen Programmcode zum Empfangen von Datensignalen, die eine zweite Mehrzahl von durch ein zweites Paar optischer Sensoren (208) erfassten Schatten anzeigen, wobei das zweite Paar optischer Sensoren entlang wenigstens eines Rands des Berührungs-Bereichs angeordnet ist, und wobei die erste und zweite Mehrzahl von Schatten durch mehrere tatsächliche Berührungspunkte verursacht werden,
**gekennzeichnet durch**
einen Programmcode zum Triangulieren der ersten Mehrzahl von Schatten zum Bestimmen einer ersten Gruppe möglicher Punkte und zum Triangulieren der zweiten Mehrzahl von Schatten zum Bestimmen einer zweiten Gruppe möglicher Punkte;
einen Programmcode zum Bestimmen möglicher Punktepaare, die Kombinationen aus der ersten Gruppe möglicher Punkte und der zweiten Gruppe möglicher Punkte umfassen;
einen Programmcode zum Berechnen der Entfernung zwischen den konstituierenden möglichen Punkten für jedes Paar möglicher Punkte; und

einen Programmcode um zu bestimmen, dass eine Mehrzahl der Paare möglicher Punkte mit den kürzesten Entfernungen zwischen ihren konstituierenden möglichen Punkten die tatsächlichen Berührungspunkte sind.

19. Berührungs-Erkennungssystem (200) zur Verarbeitung von Mehrfachberührungs-Geschehen, wobei das System umfasst:

einen Berührungs-Bereich (204);
ein erstes Paar optischer Sensoren (206), die entlang wenigstens eines Rands des Berührungs-Bereichs angeordnet sind;
ein zweites Paar optischer Sensoren (208), die entlang wenigstens eines Rands des Berührungs-Bereichs angeordnet sind; und
ein Computersystem (401), das mit dem ersten und dem zweiten Paar optischer Sensoren über eine Schnittstelle verbunden ist, wobei das Computersystem ausgebildet ist zum:

Erzeugen einer ersten Mehrzahl von Bildern des Berührungs-Bereichs auf der Basis von Datensignalen, die von dem ersten Paar Flächenbildsensoren (206) empfangen werden und Erzeugen einer zweiten Mehrzahl von Bildern des Berührungs-Bereichs auf der Basis von Datensignalen, die von dem zweiten Paar optischer Sensoren (208) empfangen werden; und
Bestimmen relativer Positionen von Berührungs-Objekten zur Erzeugung mehrfacher tatsächlicher Berührungspunkte für jedes von erster Mehrzahl von Bildern und zweiter Mehrzahl von Bildern,
**gekennzeichnet durch**
Triangulieren der relativen Positionen der Berührungs-Objekte der ersten Mehrzahl von Bildern zum Bestimmen einer ersten Gruppe möglicher Punkte und Triangulieren der relativen Positionen der Berührungs-Objekte der zweiten Mehrzahl von Bildern zum Bestimmen einer zweiten Gruppe möglicher Punkte,
Bestimmen der Paare möglicher Punkte, die Kombinationen aus der ersten Gruppe möglicher Punkte und der zweiten Gruppe möglicher Punkte umfassen,
für jedes Paar möglicher Punkte Berechnen der Entfernung zwischen seinen konstituierenden möglichen Punkten, und
Bestimmen, dass eine Mehrzahl der Paare möglicher Punkte mit den kürzesten Entfernungen zwischen ihren konstituierenden möglichen Punkten die tatsächlichen Berührungspunkte sind.

20. Berührungs-Erkennungssystem (200) nach Anspruch 19, wobei jeder optische Sensor des ersten und zweiten Paars optischer Sensoren (206, 208) in einer Baugruppe aufgenommen ist, die wenigstens eine der Flächenbildkameras umfasst.

21. Berührungs-Erkennungssystem (200) nach Anspruch 19, wobei das erste Paar optischer Sensoren (206) durch eine erste Triangulations-Grundlinie getrennt ist und das zweite Paar optischer Sensoren (208) durch eine zweite Triangulations-Grundlinie getrennt ist; und
wobei jede von erster Triangulations-Grundlinie und zweiter Triangulations-Grundlinie relativ lang ist.

22. Berührungs-Erkennungssystem (200) nach Anspruch 19, wobei das erste Paar optischer Sensoren eine erste Flächenbildkamera und eine zweite Flächenbildkamera umfasst;
wobei das zweite Paar Flächenbildkameras eine dritte Flächenbildkamera und eine vierte Flächenbildkamera umfasst; und
wobei die erste Flächenbildkamera und die dritte Flächenbildkamera nebeneinander angeordnet sind und die zweite Flächenbildkamera und die vierte Flächenbildkamera nebeneinander angeordnet sind.

23. Berührungs-Erkennungssystem (200) nach Anspruch 22, wobei die erste Flächenbildkamera und die dritte Flächenbildkamera in einer ersten Ecke des Berührungs-Bereichs angeordnet sind; und
wobei die zweite Flächenbildkamera und die vierte Flächenbildkamera in einer zweiten Ecke des Berührungs-Bereichs angeordnet sind.

24. Berührungs-Erkennungssystem (200) nach Anspruch 19, wobei die erste Mehrzahl von Bildern und die zweite Mehrzahl von Bildern Videobilder des Berührungs-Bereichs umfassen.

**Revendications**

1. Un système de détection de toucher (200) pour résoudre des scénarios multipoint, le système comprenant :

une zone tactile (204) ;
une ou plusieurs émetteurs optiques (214) pour émettre de l'énergie dans la zone tactile ;
une première paire de capteurs optiques (206) positionnés le long d'au moins un bord de la zone tactile ;
une deuxième paire de capteurs optiques (208) positionnés le long d'au moins un bord de la zone tactile ; et

un système d'informatique (401) en interface avec la première et la deuxième paire de capteurs optiques, le système informatique étant configuré pour :

recevoir des signaux de données indiquant une première pluralité d'ombres détectés par la première paire de capteurs optiques (206) et une deuxième pluralité d'ombres détectés par la deuxième paire de capteurs optiques (208), la première et la deuxième pluralité d'ombres étant causées par de multiples vrais points tactiles, **caractérisé par** le système informatique étant configuré pour:

trianguler la première pluralité d'ombres pour déterminer un premier groupe de points potentiels et trianguler la deuxième pluralité d'ombres pour déterminer un deuxième groupe de points potentiels,

déterminer des paires de points potentiels comprenant des combinaisons du premier groupe de points potentiels et du deuxième groupe de points potentiels,

pour chaque paire de points potentiels calculer la distance entre ses points potentiels constituants, et

déterminer qu'une pluralité de paires de points potentiels avec les distances les plus courtes entre leurs points potentiels constituants soient les vrais points tactiles.

2. Le système de détection de toucher (200) selon la revendication 1, dans lequel la zone tactile (204) est bordée sur trois côtés par une lunette ; et dans lequel la première et la deuxième paire de capteurs optiques (206, 208) sont chacune positionnés pour imager la lunette.

3. Le système de détection de toucher (200) selon la revendication 2, dans lequel au moins un des émetteurs optiques (214) est positionné à proximité immédiate de chaque capteur optique de la première et de la deuxième paire de capteurs optiques (206, 208) ; et

dans lequel la lunette prévoit une surface retroréfléchissante pour retroréfléchir l'énergie émise par chaque émetteur optique dans la direction du capteur optique correspondant.

4. Le système de détection de toucher (200) selon la revendication 1, dans lequel chaque capteur optique de la première et de la deuxième paire de capteurs optiques (206, 208) est logé dans un module comprenant au moins un des émetteurs optiques.

5. Le système de détection de toucher (200) selon la revendication 1, dans lequel la première paire de capteurs optiques (206) comprend un premier capteur optique (206A) et un deuxième capteur optique (206B) ;

dans lequel la deuxième paire de capteurs optiques (208) comprend un troisième capteur optique (208A) et un quatrième capteur optique (208B), et dans lequel le premier capteur optique et le troisième capteur optique sont positionnés adjacents l'un à l'autre et dans lequel le deuxième capteur optique et le quatrième capteur optique sont positionnés adjacents l'un à l'autre.

6. Le système de détection de toucher (200) selon la revendication 5, dans lequel le premier capteur optique et le troisième capteur optique sont logés dans un seul module.

7. Le système de détection de toucher (200) selon la revendication 5, dans lequel le deuxième capteur optique et le quatrième capteur optique sont logés dans un seul module.

8. Le système de détection de toucher (200) selon la revendication 5, dans lequel le premier capteur optique et le troisième capteur optique sont positionnés dans un premier coin de la zone tactile ; et

dans lequel le deuxième capteur optique et le quatrième capteur optique sont positionnés dans un deuxième coin de la zone tactile.

9. Le système de détection de toucher (200) selon la revendication 1, dans lequel la première paire de capteurs optiques (206) est séparée par une première ligne de base de triangulation et dans lequel la deuxième paire de capteurs optiques (208) est séparée par une deuxième ligne de base de triangulation ; et

dans lequel chacune de la première ligne de base de triangulation et de la deuxième ligne de base de triangulation est relativement longue.

10. Le système de détection de toucher (200) selon la revendication 1, comprenant en outre au moins une troisième paire de capteurs optiques positionnés le long d'au moins un bord de la zone tactile et en interface avec le dispositif informatique.

11. Le système de détection de toucher (200) selon la revendication 1, dans lequel au moins un capteur optique de la première paire de capteurs optiques et de la deuxième paire de capteurs optiques est un capteur linéaire et un capteur d'image de surface et une caméra vidéo.

12. Le système de détection de toucher (200) selon la revendication 1, dans lequel au moins un capteur optique de la première paire de capteurs optiques et de la deuxième paire de capteurs optiques est un capteur d'image de surface.

13. Le système de détection de toucher (200) selon la revendication 12, dans lequel le capteur d'image CCD capture des données de vidéo.

14. Une méthode pour résoudre des scénarios multipoint, la méthode comprenant :

émettre de l'énergie dans une zone tactile (204) ;
détecter une première pluralité d'ombres avec une première paire de capteurs optiques (206) qui sont positionnés le long d'au moins un bord de la zone tactile ; et
détecter une deuxième pluralité d'ombres avec une deuxième paire de capteurs optiques (208) qui sont positionnés le long d'au moins un bord de la zone tactile, la première et la deuxième pluralité d'ombres étant causées par de multiples vrais points tactiles, **caractérisé par** :

trianguler la première pluralité d'ombres pour déterminer un premier groupe de points potentiels et trianguler la deuxième pluralité d'ombres pour déterminer un deuxième groupe de points potentiels ;
déterminer des paires de points potentiels comprenant des combinaisons du premier groupe de points potentiels et du deuxième groupe de points potentiels ;
calculer la distance entre les points potentiels constituants pour chaque paire de points potentiels ; et
déterminer qu'une pluralité des points potentiels avec les moindres distances entre les points potentiels constituants sont les vrais points tactiles.

15. La méthode selon la revendication 14, selon laquelle la triangulation de la première pluralité d'ombres est réalisée en même temps que la triangulation de la deuxième pluralité d'ombres.

16. La méthode selon la revendication 14, selon laquelle une paire de points potentiels comprend un point potentiel du premier groupe de points potentiels et un point potentiel du deuxième groupe de points potentiels.

17. La méthode selon la revendication 14, comprenant en outre l'ajustement du niveau d'énergie émise dans la zone tactile pour réduire ainsi l'effet d'un changement de la lumière ambiante.

18. Un médium lisible par ordinateur, concrètement comprenant du code de programme opérable pour conduire un processeur à identifier un vrai point tactile dans une pluralité de points potentiels, le médium lisible par ordinateur comprenant :

du code de programme pour recevoir des signaux de données indiquant une première pluralité d'ombres détectée par une première paire de capteurs optiques (206), la première paire de capteurs optiques étant positionnée le long d'au moins un bord d'une zone tactile (204), et
du code de programme pour recevoir des signaux de données indiquant une deuxième pluralité d'ombres détectée par une deuxième paire de capteurs optiques (208), la deuxième paire de capteurs optiques étant positionnée le long d'au moins un bord de la zone tactile, et la première et la deuxième pluralité d'ombres étant causées par de multiples points tactiles ;
**caractérisé par**
du code programme pour trianguler la première pluralité d'ombres pour déterminer un premier groupe de points potentiels et pour trianguler la deuxième pluralité d'ombres pour déterminer un deuxième groupe de points potentiels ;
du code programme pour déterminer des paires de points potentiels comprenant des combinaisons du premier groupe de points potentiels et du deuxième groupe de points potentiels ;
du code programme pour calculer la distance entre des points potentiels constituants pour chaque paire de points potentiels ; et
du code programme pour déterminer qu'une pluralité des paires de points potentiels avec les distances les plus courtes entre leurs points potentiels constituants soient les vrais points tactiles.

19. Un système de détection de toucher (200) pour résoudre des scénarios multipoint, le système comprenant :

une zone tactile (204) ;
une première paire de capteurs optiques (206) positionnés le long d'au moins un bord de la zone tactile ;
une deuxième paire de capteurs optiques (208) positionnés le long d'au moins un bord de la zone tactile ; et
un système d'informatique (401) en interface avec la première paire et la deuxième paire de capteurs optiques, le système informatique étant configuré pour :

générer une première pluralité d'images de la zone tactile basée sur des signaux de données reçus par la première paire de capteurs d'image de surface (206) et générer une deuxième pluralité d'images de la zone tactile basée sur des signaux de données reçus par la deuxième paire de capteurs optiques (208) et

pour chacune de la première pluralité d'images et la deuxième pluralité d'images déterminer des positions relatives d'objets tactiles utilisés pour réaliser des multiples vrais points tactiles **caractérisé par**

trianguler les positions relatives des objets tactiles de la première pluralité d'images pour déterminer un premier groupe de points potentiels et trianguler les positions relatives des objets tactiles de la deuxième pluralité d'images pour déterminer un deuxième groupe de points potentiels, déterminer des paires de points potentiels comprenant des combinaisons du premier groupe de points potentiels et du deuxième groupe de points potentiels,

pour chaque paire de points potentiels calculer la distance entre ses points potentiels constituants, et

déterminer qu'une pluralité de paires de points potentiels avec les distances les plus courtes entre leurs points potentiels constituants soient les vrais points tactiles.

20. Le système de détection de toucher (200) selon la revendication 19, dans lequel chaque capteur optique de la première et de la deuxième paire de capteurs optiques (206, 208) est logé dans un module comprenant au moins une des caméras d'image de surface.

21. Le système de détection de toucher (200) selon la revendication 19, dans lequel la première paire de capteurs optiques (206) est séparée par une première ligne de base de triangulation et dans lequel la deuxième paire de capteurs optiques (208) est séparée par une deuxième ligne de base de triangulation ; et

dans lequel chacune de la première ligne de base de triangulation et de la deuxième ligne de base de triangulation est relativement longue.

22. Le système de détection de toucher (200) selon la revendication 19, dans lequel la première paire de capteurs optiques comprend une première caméra d'image de surface et une deuxième caméra d'image de surface ;

dans lequel la deuxième paire de caméras d'image de surface comprend une troisième caméra d'image de surface et une quatrième caméra d'image de surface ; et

dans lequel la première caméra d'image de surface et la troisième caméra d'image de surface sont positionnées adjacentes l'une à l'autre et dans lequel la deuxième caméra d'image de surface et la quatrième caméra de surface sont positionnées adjacentes l'une à l'autre.

23. Le système de détection de toucher (200) selon la revendication 22, dans lequel la première caméra d'image de surface et la troisième caméra d'image de surface sont positionnées dans un premier coin de la zone tactile ; et dans lequel la deuxième caméra d'image de surface et la quatrième caméra d'image de surface sont positionnées dans un deuxième coin de la zone tactile.

24. Le système de détection de toucher (200) selon la revendication 19, dans lequel la première pluralité d'images et la deuxième pluralité d'images comprennent des images vidéo de la zone tactile.

102B

112

102A

104

110

100

106A

108

106C

106B

# FIGURE 1

103

102B

118

114

106A

116

120

107

121

104

# FIGURE 2

FIGURE 3

FIGURE 4

FIG. 5

**FIG. 6A**

**FIG. 6B**

300

208A 206A

204D

212

204A

210

208B

204

204C

204B

206B

**FIG. 7A**

208A 400 212 208B

204D

204A

206A

210

204

204C

204B

206B

**FIG. 7B**

**FIG. 8**

208A

300

212

206A

210

206B

204

**FIG. 9**

206A

214

206B

**FIG. 10**

301 300

START

302

DETECT SHADOWS IN TOUCH AREA USING A FIRST PAIR OF OPTICAL
SENSORS AND A SECOND PAIR OF OPTICAL SENSORS

304

TRIANGULATE THE SHADOWS DETECTED BY THE FIRST PAIR OF
OPTICAL SENSORS TO DETERMINE A FIRST SET OF POTENTIAL POINTS

306

TRIANGULATE THE SHADOWS DETECTED BY THE SECOND PAIR OF
OPTICAL SENSORS TO DETERMINE A SECOND SET OF POTENTIAL POINTS

308

DETERMINE COMBINATIONS OF POTENTIAL POINT PAIRS, EACH HAVING
A POTENTIAL POINT FROM THE FIRST SET OF POTENTIAL POINTS AND A
POTENTIAL PONT FROM THE SECOND SET OF POTENTIAL POINTS

310

FOR EACH POTENTIAL POINT PAIR, CALCULATE THE DISTANCE
BETWEEN THE CONSTITUENT POTENTIAL POINTS

312

IDENTIFY THE 'N' POTENTIAL POINT PAIRS HAVING THE SHORTEST
DISTANCES BETWEEN THEIR CONSTITUENT POTENTIAL POINTS (WHERE N=
THE NUMBER OF SHADOWS DETECTED BY A SINGLE OPTICAL SENSOR)

314

DESIGNATE THE 'N' POTENTIAL POINT PAIRS
AS TRUE TOUCH POINTS

316

END

*FIG. 11*

200

401

Processor    402

System
Memory
404

System Bus    408

DSP
405

Operating
System    417

Information Display
Program Module    419

Touch Panel Control
Program Module    421

Information Data
Files    423

Storage
Device
411

System Interface
Components    406

Storage Device
Interface    410

Network    412
Interface

Display Screen
Interface    414

I/O Port    416
Interface

208A

208B

206A

204D

206B

204A

204

204C

204B

**FIG. 12**

**EP 2 353 069 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NZ 571681
- US 49421709 A
- US 12368372 B
- US 2006232830 A1
- DE 102007021537 A1